# EUROPEAN PATENT APPLICATION

(11) **EP 1 176 118 A1**
(43) Date of publication of application: **30.01.2002**
(21) Application number: 01118366.2
(22) Date of filing: 27.07.2001
(51) Int. Cl.: C01B 13/10

(54) **Ozone storing method and ozone extracting method**

(30) Priority: 27.07.2000 JP 2000227127
(71) Applicant: THE KANSAI ELECTRIC POWER CO., INC., Osaka-shi, Osaka 530-8270 (JP)
(72) Inventor: Murai, Akira, Nara 632-0007 (JP)
(74) Representative: Müller-Boré & Partner Patentanwälte

(57) **Abstract**

An ozone storage apparatus for storing ozone efficiently and extracting ozone effectively is disclosed. Also ozone storage methods comprising the steps of supplying ozone either to a dried silica gel which is produced by neutralizing sodium silicate and sulfuric acid and that is then washed with water to a pH level between 6 and 7 or further processing the dried silica gel by crushing it and washing with at least one of a sulfuric acid or water. The methods also include a process where if oxygen has been adsorbed in the silica gel, a vacuum is created inside the storage container holding the silica gel, and then ozone can be supplied to the silica gel. Silica gel containing aluminum between 0.002 - 0.1 percent by weight is used for the storage medium. Also, the ozone is extracted from a tube-valve associated with the storage container by a natural downward flow.

## Description

The present invention relates to a method of storing ozone that has been produced and a method of extracting the stored ozone for a desired use.

In recent years, a great deal of attention has been given to a water treatment process that injects ozone into the water to treat substances that are difficult to decompose through regular water treatments. A method using a silent electric discharge has been used to produce ozone. If the water treatment process using ozone is applied to domestic wastewater, the demand for electric power to produce the ozone will increase during the daytime. Therefore, to reduce electricity costs, it is necessary to produce and store ozone during the night when electricity rates are cheaper than the daytime, and extract the ozone during the daytime when electricity rates and demands are higher than the night.

In conventional ozone storage methods, ozone is stored in a cooled adsorbent by applying pressure and then to extract the ozone, the adsorbent is heated and/or an ozone storage container containing the adsorbent is decompressed.

In such conventional ozone storage methods, the ozone storage container is filled with a silica gel, which is cooled to a temperature between -30ºC and -60ºC, and then the ozone is supplied with pressure so as to be adsorbed in the cooled silica gel. To extract the ozone from the silica gel, the silica gel contained in the ozone storage container is heated and also the inside of the storage container is decompressed.

For example, such techniques as described in Japanese Laid-Open Patent Publication No. 11-292512 are known in the art. In this art, an adsorbent is cooled to a temperature lower than -30ºC by a cooling means such as refrigeration device and then ozone is supplied with pressure to the adsorbent so that the ozone can be stored in the adsorbent. When the ozone is extracted from the adsorbent, the adsorbent is heated and/or decompressed. Specifically, in the conventional ozone storage method, the adsorbent is cooling when it adsorbs ozone and it is heating when it desorbs ozone. Therefore, this method causes a drastic change in temperature for the adsorbent and as a result, the durability of the adsorbent deteriorates. Moreover, this method requires a large amount of energy for electricity.

Additionally, the storage container is supplied with pressure so as to allow pressurizing up to 5 atm. when the adsorbent adsorbs ozone and it is decompressing to 0.04 atm. when the ozone is discharged.

In such a conventional ozone storage method, the ozone needs to be supplied with high-pressure. This method is inefficient because a great deal of electric power is required for adsorbing ozone in the silica gel by applying high-pressure. Also, since pressurized ozone becomes reactive, the durability of the storage container becomes a matter of concern.

Further, this pressurizing step causes a significant cost increase because a large-scale apparatus and additional works are required. Furthermore, a large amount of space is required to install such an ozone storage apparatus. For these reasons, there are many problems to be solved before widespread use of an ozone storage apparatus is acceptable.

Another concern relates to the characteristics of the silica gel in an ozone storage mechanism.

In general, it is known that silica gel has characteristics such that the amount of gas adsorbed in silica gel increases in proportion to the surface area. However, silica gel does not exhibit this characteristic with ozone. This means that ozone is not simply adsorbed in silica gel by surface adsorption, but rather it is adsorbed by another mechanism.

Also, through a computer approximation using the semi-empirical molecular orbital theory, it has been found that an ozone molecule is likely to bond near aluminum in the silica gel.

Thus, when the silica gel adsorbs ozone, it is necessary to use silica gel that is suitable for the ozone adsorbing mechanism. It is also necessary to use storing and extracting methods that are appropriate to the ozone adsorbing mechanism.

As a result of a number of diligent studies to overcome the above-discussed problems in ozone storage/extraction methods, the inventor has found more efficient ozone storage/extraction methods.

Specifically, an object of the present invention is to provide ozone storage/extraction methods appropriate to the ozone storing characteristics of the silica gel.

According to this invention, when ozone is supplied to a silica gel, the ozone is isothermally compressed in the micropores of the silica gel and a part of the ozone is liquefied in the silica gel. The inventor has determined efficient ozone storage/extraction methods based on consideration of this ozone storage mechanism.

When ozone is compressed isothermally, the micropores of a silica gel need to be maintained in certain dimensions. In the conventional method, the micropores of a silica gel either are melted by an excessive washing with water after the silica gel is neutralized, or when the water solvent evaporates, the silica gel cracks and the micropores of the silica gel collapse.

This invention is to overcome these problems and other problems. Specifically, the present invention is directed to an ozone storage/extraction method and apparatus where silica gel produced by a neutralization of an alkaline silicate under a weak acid to a pH level between 6 and 7 is dried and then used, or the dried silica gel is further crushed and washed with sulfuric acid or water. A crushed silica gel increases the surface area of the substance, so this effort makes the speed of adsorption/desorption faster than the original silica gel. In the present invention, the silica gel includes 0.002 - 0.1 percent by weight of aluminum.

Also, to prevent nitrogen from adsorbing into the silica gel, oxygen is supplied so as to be adsorbed in the silica gel and then the oxygen is evacuated. Thereafter, the ozone is supplied to the silica gel.

To extract ozone from the silica gel, the present invention uses diffusion dependent on the different concentrations of ozone between the outside of the silica gel and the surface of the capillary, and then uses the downward flow of the ozone caused by gravity.

In conventional methods, ozone is extracted from the silica gel by heating and/or by decompressing so as to vaporize the ozone. On the other hand, the inventor has evaluated that ozone storage in a silica gel goes through an isothermal compressing process and that ozone is becoming a cluster when it is stored in the silica gel.

An ozone extraction method, according to the present invention, utilizes the diffusion of ozone and the downward flow by gravity.

In the ozone extraction method of the present invention, ozone is stored in an ozone storage container filled with the silica gel and a tube-valve located in the lower part of the ozone storage container is opened. As this tube-valve is opened, oxygen is supplied through another opening that is located in the upper part of the ozone storage container at a rate adjusted to the downward flow rate of the ozone. Accordingly, a natural downward flow of ozone can be achieved.

The above objects and features of the present invention will be apparent to those skilled in the art from the following description of the preferred embodiments thereof when considered in conjunction with the appended drawings in which:

Figure 1 is a schematic diagram showing the structure of an ozone storage apparatus according to the present invention.

Figures 2A-2D are schematic diagrams showing the ozone storage/extraction structure according to the present invention.

Figure 3 is another schematic diagram showing the modified structure of an ozone storage apparatus according to the present invention.

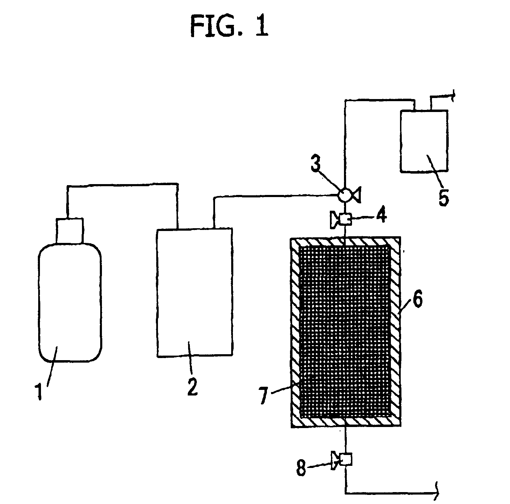

The ozone storage apparatus shown in Figure 1 comprises an oxygen supply source 1, an ozone generating device 2, a vacuum pump 5, an ozone storage container 6 and a silica gel 7. The oxygen supply source 1 and the ozone generating device 2 are connected by a pipe so as to supply oxygen from the oxygen supplying source 1 to the ozone generating device 2.

The ozone produced by the ozone generating device 2 is introduced into the ozone storage container 6 through another pipe. A two-way valve 3 and a valve 4 are located in the flow path of the pipe connecting the ozone generating device 2 and the ozone storage container 6.

Also, pipes are connected to an upper part and a lower part of the ozone storage container 6, respectively. A valve 8 is located in the pipe connected to the lower part of the ozone storage container 6.

The silica gel 7 that is used to fill the ozone storage container 6 will now be explained.

As a silica gel capable of storing ozone, a silica gel that is suitable for isothermally compressing ozone in the micropores thereof is used.

Such silica gel is produced by a method comprising the steps of neutralizing sodium silicate and sulfurio acid to produce a silica gel and washing the silica gel with water to a pH level between 6 and 7. In this procedure, it is important to avoid excessive washing with water to prevent the micropores from collapsing or melting in this water-washing step. This is also important to keep the sulfuric acid in the silica gel.

Thereafter, the silica gel is dried and then used or it is further treated and crushed and washed with sulfuric acid or water.

When the silica gel is washed with sulfuric acid, the concentration of sulfuric acid should be 0.1 - 5 percent by weight and the silica gel should be washed for 1 - 2 hours. Washing the silica gel with sulfuric acid allows the sulfuric acid to remain in the silica gel and thereby the micropores in the silica gel can be prevented from collapsing when it is dried.

When the silica gel is washed with water, it is washed for about 1 hour. Washing the silica gel with water can prevent the aluminum in the silica gel from flowing out.

In the mechanism of adsorbing the ozone in the silica gel, the ozone which is isothermally compressed in the micropores is held *in* the micropores of the silica gel by the interaction between the ozone and the aluminum in the silica gel. Therefore, the silica gel including 0.002 - 0.1 percent by weight of aluminum is used as a storage medium.

Next, the process of evacuating nitrogen from inside the ozone storage container 6 is explained below.

The silica gel 7 capable of adsorbing and storing ozone is evacuated after oxygen has been adsorbed therein. This is done to remove nitrogen that has been adsorbed in the silica gel. By removing the nitrogen from the silica gel, the amount of ozone adsorbed in the silica gel increases.

Referring to Figure 1, first, oxygen is supplied to the silica gel 7 in the ozone storage container 6 from the oxygen supply source 1. Then, shut off the valve 8, connect a vacuum pump 5 to the ozone storage container 6 through the two-way valve 3 and then operate the vacuum pump 5 to evacuate the ozone storage container 6. Thereby, the inside of the ozone storage container 6 becomes under vacuum.

To remove any nitrogen adsorbed in the silica gel, the ozone storage container 6 needs to be evacuated after oxygen has been supplied to the silica gel 7 as a preliminary process prior to supplying ozone to be adsorbed in the silica gel.

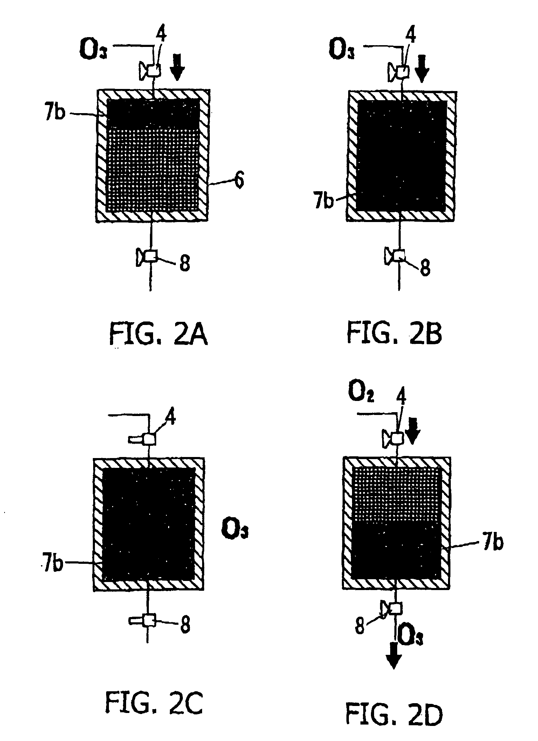

The ozone storage mechanism will be now explained referring to Figures 2A-2D.

The valves 4 and 8 are opened to introduce ozone into the ozone storage container 6 from the ozone generating device 2 and thereby ozone is adsorbed in the silica gel 7. Since ozone is supplied through the valve located in the upper part of the ozone storage container 6, ozone initially starts to be adsorbed in the adsorbent in the upper portion of the ozone storage container 6. As shown in Figure 2A, an adsorbed ozone region 7b of the silica gel appears in an upper portion of the ozone storage container 6. Then, as shown in Figure 2B, by continuously supplying ozone, the ozone adsorbed region extends throughout the entire silica gel 7 in the ozone storage container 6.

When the adsorbed ozone region 7b extends to the bottom of the ozone storage container 6, as shown in Figure 2B, the valves 4 and 8 are shut off to store the ozone in the ozone storage container 6, as shown in Figure 2C.

To determine whether a sufficient amount of ozone is stored in the ozone storage container 6, an ozone concentration monitor is located in the inside lower part of the ozone storage container 6. It is also possible to judge whether a sufficient amount of ozone is stored in the ozone storage container 6 from the color of the silica gel based on the fact that the silica gel turns to blue when ozone is adsorbed.

To extract ozone from the ozone storage container 6, valves 4 and 8 are opened and oxygen is supplied into the ozone storage container 6. A rate of oxygen supply should be adjusted to be substantially similar to a natural downward flow rate of ozone. For example, one supplying rate of oxygen is 200 ml/min for a 1-liter storage container.

Therefore, ozone stored in the ozone storage container 6 can be extracted without hindering the natural downward flow of ozone. As a result of many studies, the inventor found that the ozone stored in silica gel under low pressure, for example 1.0 - 5.0 atm. and preferably 1.0 - 1.1 atm., becomes clathrated. The inventor has determined that the best way to extract the clathrated ozone in the cluster state is by using a natural downward flow of ozone.

Also, the ozone in this cluster state shows strong oxidizing and decomposing characteristics and thus by maintaining the ozone in this cluster state, the oxidizing and decomposing abilities of the ozone can be improved.

As it is clear from the description above, ozone can be stored efficiently by using the method disclosed in this invention. Further, by using the method of the present invention, the ozone in the cluster state can be extracted, thereby oxidation decomposition using ozone can be performed efficiently.

Furthermore, the present invention can simplify the structure of ozone storage apparatus and also improve the durability of the ozone storage apparatus.

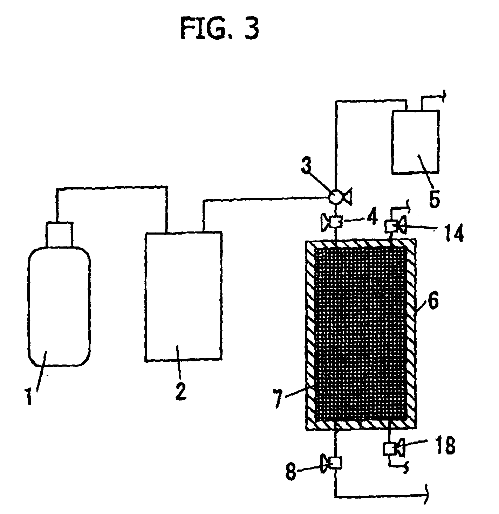

Figure 3 shows a modified ozone storage apparatus similar to Figure 1 that uses the same reference numeral for the same elements. This apparatus similarly comprises an oxygen supply source 1, an ozone generating device 2, a vacuum pump 5, an ozone storage container 6 and a silica gel 7. The oxygen supply source 1 and the ozone generating device 2 are connected by a pipe so as to supply oxygen from the oxygen supplying source 1 to the ozone generating device 2.

The ozone produced by the ozone generating device 2 is introduced into the ozone storage container 6 through another pipe. A two-way valve 3 and a valve 4 are located in the flow path of the pipe connecting the ozone generating device 2 and the ozone storage container 6.

Also, pipes are connected to an upper part and a lower part of the ozone storage container 6, respectively. A valve 8 is located in one of the pipes connected to the lower part of the ozone storage container 6. A tube-valve 18 is located in the other pipe connected to the lower part of the ozone storage container 6. A tube-valve 14 is located in one of the pipes connected to the upper port of the ozone storage container.

As described in connection with Figures 1 and 2, the valves 4 and 8 can be used to extract ozone from the container 6. With the embodiment of Figure 3, it is also possible to extract ozone from the container 6 using the tube-valves. In this case, valves 4 and 8 can be used to fill the container with ozone as described above and the tube-valves can be used to extract the ozone. When using the tube-valves for extracting the ozone, oxygen can be supplied to the container 6 through tube-valve 14.

The advantage of using the tube valves is that the ozone can be extracted through the lower tube-valve 18 without applying pressure by opening the upper and lower tube-valves.

In some instances, since the tube-valve itself cannot stop the gas flow, additional valves can be provided on the upper and lower tube-valves so that the gas supply and ozone extraction can be controlled.

It is to be understood that although the present invention has been described with regard to preferred embodiments thereof, various other embodiments and variants may occur to those skilled in the art, which are within the scope and spirit of the invention, and such other embodiments and variants are intended to be covered by the following claims.

The present application is based on JP Patent Application No. 2000-227127, filed July 27, 2000, which is incorporated herein by reference.

## Claims

1. A method of storing ozone comprising the steps of:
neutralizing sodium silicate and sulfuric acid to form a silica gel;
washing the silica gel with water to a pH level between 6 and 7;
drying the silica gel;
providing the silica gel into a storage container; and
supplying ozone to the silica gel in the storage container.

2. A method of storing ozone comprising the steps of:
neutralizing sodium silicate and sulfuric acid to form a silica gel:
washing the silica gel with water to a pH level between 6 and 7;
drying the silica gel;
crushing and washing the silica gel with at least one of sulfuric acid and water;
providing the crushed and washed silica gel into a storage container; and
supplying ozone to the silica gel in the storage container.

3. A method of storing ozone comprising the steps of:
passing oxygen through a silica gel stored in a container;
creating a vacuum inside the container; and
supplying ozone to the silica gel.

4. A method of storing ozone comprising the steps of:
providing a container with a storage medium therein; and
using a silica gel comprising aluminum in 0.002 - 0.1% by weight, as the storage medium.

5. A method of extracting ozone comprising the steps of:
extracting ozone adsorbed in a silica gel by a natural downward flow through a tube-valve located in a lower part of a storage container; and
supplying oxygen through an opening located in an upper portion of the storage container at a flow rate that is substantially similar to a flow rate of the natural downward flow of ozone.
